# DEMANDE DE BREVET EUROPEEN

(11) **EP 4 746 016 A1**
(43) Date de publication de la demande: **20.05.2026**
(21) Numéro de dépôt: 25209817.3
(22) Date de dépôt: 20.10.2025
(51) Int. Cl.: H01H 71/12, H01H 9/22, H02B 1/04, H02B 1/056

(54) **DISPOSITIF DE PROTECTION ÉLECTRIQUE, ENSEMBLE DE DISTRIBUTION ET TABLEAU ÉLECTRIQUE ASSOCIÉS**

(30) Priorité: 21.10.2024 FR 2411462
(71) Demandeur: SCHNEIDER ELECTRIC INDUSTRIES SAS, 92500 Rueil-Malmaison (FR)
(72) Inventeur: BURNOT, Claude, 92500 Rueil-Malmaison (FR); AUGER, Pascal, 92500 Rueil-Malmaison (FR); SCHWAAR, Robin, 92500 Rueil-Malmaison (FR); BADIN, Didier, 92500 Rueil-Malmaison (FR); LINARES, Louis, 92500 Rueil-Malmaison (FR)
(74) Mandataire: Lavoix

(57) **Abrégé**

Ce dispositif de protection (300) électrique est configuré pour être monté de manière réversible sur un dispositif de distribution (110) comprenant un bus de puissance (124). Le dispositif de protection des bornes d'arrivée (302), connectables au bus de puissance, et un mécanisme de commutation (310) avec un contact mobile (370) et un déclencheur (372). Le dispositif de protection comprend un mécanisme de sécurité (500), qui comprend une portion d'appui (502), qui est mobile et qui est configurée pour être repoussée, à l'encontre d'un organe de rappel (504), dans une position reculée lorsque le dispositif de protection est monté sur le dispositif de distribution. Lors du démontage du dispositif de protection, la portion d'appui se déplace et le dispositif de sécurité active le déclencheur (372), faisant passer le mécanisme de commutation dans une configuration d'isolement avant que chaque borne d'arrivée ne soit déconnectée du bus de puissance.

## Description

La présente invention concerne un dispositif de protection électrique, un ensemble de distribution comprenant un tel dispositif de protection, ainsi qu'un tableau électrique comprenant un tel ensemble de distribution.

Une installation électrique comporte généralement un tableau électrique, ou une armoire électrique, reliant cette installation électrique à un réseau de distribution d'électricité et comportant divers dispositifs de protection, de commande et de surveillance de l'installation électrique. Parmi les dispositifs de protection électrique, on considère ici les dispositifs de protection, tels que les disjoncteurs, qui comprennent des contacts séparables par un mécanisme de commutation. Le mécanisme de commutation est généralement actionnable à la main par l'intermédiaire d'une manette, et comprend aussi un déclencheur, dite aussi barre de déclenchement, qui est configuré pour faire basculer le mécanisme de commutation en configuration déclenchée lorsque le déclencheur est excité par un défaut électrique d'un type prédéterminé. L'excitation du déclencheur est faite par exemple par déplacement du déclencheur. EP-4 064 317-A1 décrit un exemple d'un tel dispositif de protection.

Pour plus de facilité d'installation et de maintenance des installations électriques, les dispositifs de protection sont modulaires, c'est-à-dire montés sur dispositif de distribution comprenant un bus de puissance, de sorte que qui assure conjointement le maintien mécanique et l'approvisionnement en puissance électrique. Lorsqu'un dispositif de protection est démonté du dispositif de distribution alors qu'un courant circule encore, des arcs électriques risque de se former et d'endommager le dispositif de protection et/ou le dispositif de distribution, ce qui n'est pas souhaitable. EP-1 148 530-A1, CN-204 315 485-U et CN-204 315 929-U décrivent chacun des dispositifs de sécurité connus.

C'est à ces problèmes qu'entend plus particulièrement remédier l'invention, en proposant un dispositif de protection à la fois modulaire et à la sécurité améliorée.

À cet effet, l'invention concerne un dispositif de protection électrique, comprenant :
- un boitier, qui est configuré pour être monté, de manière réversible et selon un mouvement de montage, sur un dispositif de distribution comprenant un bus de puissance avec au moins une phase et éventuellement un neutre, le dispositif de protection étant alors dans une position montée, dans laquelle une face arrière du boitier est orientée vers le dispositif de distribution,
- un premier chemin de conduction, comprenant :
   - une première borne d'arrivée, qui est configurée pour être connectée au bus de puissance,
   - une première borne de départ, qui est configurée pour être connectée à une charge électrique, et
   - un premier contact mobile, qui est mobile par rapport au boîtier, entre une position de conduction, dans laquelle le premier contact mobile connecte électriquement la première borne d'arrivée à la première borne de départ, et une position d'isolement, dans laquelle la première borne d'arrivée et la première borne de départ sont électriquement isolées l'une de l'autre ;
- un mécanisme de commutation, qui est logé dans le boîtier et qui est configuré pour basculer entre :
   - une configuration armée, dans laquelle le mécanisme de commutation met le premier contact mobile en position de conduction, et
   - une configuration déclenchée, dans laquelle le mécanisme de commutation met le premier contact mobile en position d'isolement ;
dans lequel :
- le mécanisme de commutation comprend un déclencheur, qui est mobile entre une position neutre et une position excitée, le déclencheur étant configuré pour faire basculer le mécanisme de commutation en configuration déclenchée lorsque le déclencheur est en position excitée ;
- le dispositif de protection électrique comprend un mécanisme de sécurité, qui comprend :
   - une portion d'appui, qui est mobile entre une position reculée et une position avancée, la portion d'appui étant accessible au travers d'une lumière ménagée dans le boitier et étant configurée pour être repoussée en position reculée par le dispositif de distribution lorsque le dispositif de protection est monté sur le dispositif de distribution selon le mouvement de montage,
   - un organe de rappel, qui tend à rappeler la portion d'appui vers la position avancée,
   - une portion de déclenchement, qui est mobile entre une position d'activation, dans laquelle la portion de déclenchement repousse le déclencheur de la position neutre vers la position excitée, et une position de retrait, dans laquelle la portion de déclenchement ne repousse pas le déclencheur,
   - un dispositif de transmission, qui relie la portion d'appui à la portion de déclenchement, de sorte que lorsque la portion d'appui est en position reculée, la portion de déclenchement est en position de retrait, le mécanisme de sécurité étant dans une configuration de retrait, tandis que lorsque la portion d'appui est en position avancée, la portion de déclenchement est en position d'activation, le mécanisme de sécurité étant dans une configuration d'activation,
- le mécanisme de sécurité est dans la configuration de retrait lorsque le dispositif de protection est en position montée sur le dispositif de distribution,
- le mécanisme de sécurité est configuré pour que, au cours d'un mouvement de démontage, opposé au mouvement de montage, le dispositif de sécurité passe de la configuration de retrait vers la configuration d'activation déclencheur avant que la borne d'arrivée ne soit déconnectée du bus de puissance.

Grâce à l'invention, chaque circuit de conduction est ouvert avant la déconnexion de la borne d'arrivée correspondante du bus de puissance, ce qui empêche l'apparition d'arcs électriques éventuels entre la borne d'arrivée considérée et le bus de puissance. Le démontage du dispositif de protection est sécurisé, et ceci même si le dispositif de protection était initialement « chaud », c'est-à-dire si en configuration armée et qu'un courant électrique circulait au travers des chemins de conduction. Une telle possibilité de démontage « à chaud » est aussi appelée *« hotswap »* en anglais. Lorsque le dispositif de protection est démonté du dispositif de distribution, l'organe de rappel maintient le dispositif de sécurité en configuration d'activation, autrement dit le déclencheur est maintenu en position excitée, ce qui empêche de pouvoir réarmer manuellement le mécanisme de commutation. Il est donc impossible de remonter sur le dispositif de distribution un dispositif de protection qui serait déjà en configuration armée, ce qui contribue à l'amélioration de la sécurité lors du montage à chaud du dispositif de protection, c'est-à-dire lors du montage du dispositif de protection sur un bus de puissance déjà sous courant.

Selon des aspects avantageux mais non obligatoires de l'invention, un tel dispositif de protection peut incorporer une ou plusieurs des caractéristiques suivantes prises isolément ou selon toute combinaison techniquement admissible :
- La lumière est ménagée dans la face arrière du boitier.
- Le boitier comprend des organes de fixation, qui sont configurés pour coopérer, notamment par complémentarité de formes, avec le dispositif de distribution, de sorte que le mouvement de montage est un mouvement de rotation autour d'un axe de montage situé à proximité d'un premier bord de la face arrière,
   alors que la lumière est ménagée à distance du premier bord.
- Le boitier ménage un volume interne,
   alors que le mécanisme de commutation et le mécanisme de sécurité sont conjointement reçus dans le volume interne.
- Le boitier du dispositif de protection est un boitier modulaire, qui inclut :
   - un premier boitier, qui reçoit le mécanisme de sécurité et qui présente un premier orifice, par lequel dépasse une extension de la portion de déclenchement,
   - un deuxième boitier, qui est différent du premier boitier et qui reçoit le mécanisme de commutation,

   alors que le premier boitier ménage une cavité de réception du deuxième boitier, le premier boitier et le deuxième boitier étant configurés pour être assemblés l'un à l'autre de manière à former le boitier du dispositif de protection, dans une configuration assemblée du boitier,
   que le premier boitier présente un premier orifice, qui débouche dans la cavité, tandis que le mécanisme de sécurité comprend une extension, qui est activable par portion de déclenchement et qui s'étend, au travers du premier orifice, dans la cavité, l'extension étant mobile entre une première position et une deuxième position lorsque la portion de déclenchement circule entre la position d'activation et la position de retrait,
- que le deuxième boitier présente un deuxième orifice, qui est situé en regard du premier orifice lorsque le boitier est en configuration assemblée,
- et que lorsque le boitier est en configuration assemblée, l'extension s'étend à l'intérieur du deuxième boitier, de sorte que :
   - lorsque la portion de déclenchement se déplace de la position de retrait vers la position d'activation, la portion de déclenchement active l'extension, l'extension se déplaçant de la première position vers la deuxième position,
   - l'extension repousse le déclencheur de la position neutre vers la position excitée.
- Le premier boitier comprend un mécanisme auxiliaire, qui est un mécanisme d'accumulation d'énergie mécanique, qui est commutable entre une configuration armée et une configuration déclenchée, l'extension étant dans la première position lorsque le mécanisme auxiliaire est dans la configuration armée, et dans la deuxième position lorsque le mécanisme auxiliaire est dans la configuration déclenchée,
   alors que le mécanisme auxiliaire est configuré pour commuter de la configuration armée vers la configuration déclenchée lorsque la portion de déclenchement se déplace de la position de retrait vers la position d'activation, et que le mécanisme auxiliaire est configuré pour transmettre à l'extension une force suffisante pour faire basculer le mécanisme de commutation de la configuration armée à la configuration déclenchée.

L'invention concerne aussi un ensemble de distribution comprenant :
- un exemplaire du dispositif de protection tel que décrit précédemment, et
- un dispositif de distribution, configuré pour distribuer de l'énergie électrique provenant d'une source de puissance à au moins une charge électrique, la source de puissance comprenant au moins une phase et éventuellement un neutre,
dans lequel :
- le dispositif de distribution comprend un bus de puissance, qui comprend plusieurs barres conductrices, qui incluent au moins une barre de phase et éventuellement une barre de neutre, la barre de neutre étant associée au neutre de la source de puissance, chaque barre de phase étant associée à une phase respective de la source de puissance,
- le dispositif de protection est monté sur le dispositif de distribution, la portion d'appui étant repoussée en position reculée par le dispositif de distribution, chaque borne d'entrée étant connectée à la barre conductrice correspondante.

Avantageusement, les barres conductrices s'étendent parallèlement entre elles selon un axe principal du dispositif de distribution, et les barres conductrices sont prévues pour le montage simultané de plusieurs exemplaires du dispositif de protection, alignés les uns à côté des autres selon l'axe principal.

L'invention concerne également un tableau électrique comprenant :
- un coffre, délimitant une enceinte et présentant un fond,
- l'ensemble de distribution tel que décrit précédemment,
dans lequel le dispositif de distribution est fixé sur le fond du coffre.

L'invention sera mieux comprise, et d'autres avantages de celle-ci apparaîtront plus clairement à la lumière de la description qui va suivre, de deux modes de réalisation d'un dispositif de protection, d'un ensemble de distribution et d'un tableau électrique, conformes à son principe, donnée uniquement à titre d'exemple et faite en référence aux dessins annexés, dans lesquels :
- [Fig 1] la figure 1 est une vue en perspective partiellement éclatée un tableau électrique conforme à un premier mode de réalisation de l'invention, le tableau électrique comprenant un ensemble de distribution, lui-aussi conforme à l'invention ;

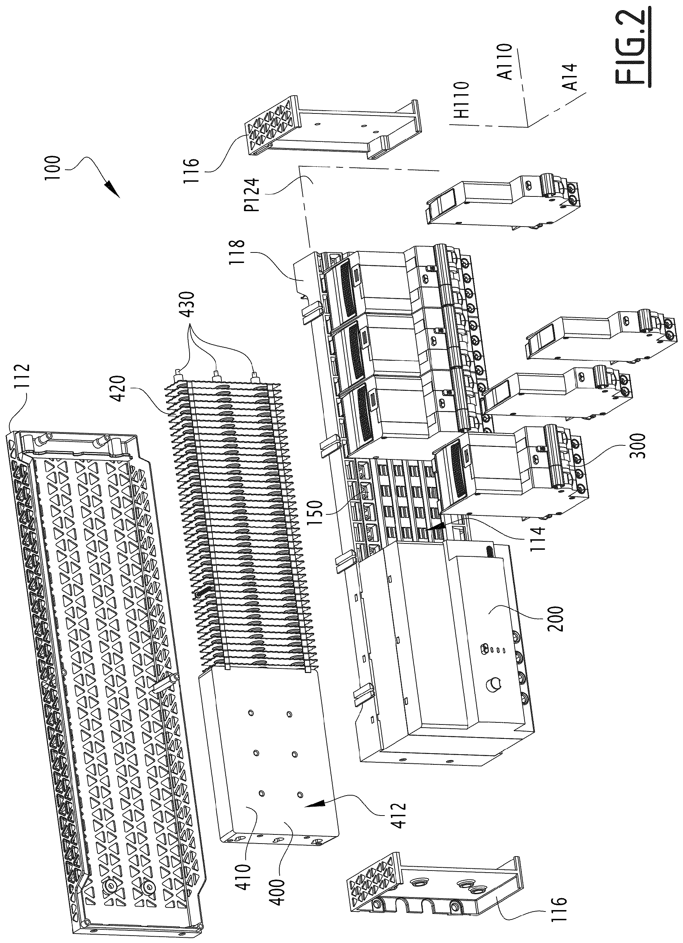

- [Fig 2] la figure 2 est une vue en perspective partiellement éclatée de l'ensemble de distribution de la figure 1 ;
- [Fig 3] la figure 3 représente respectivement, sur deux inserts a) et b), une vue en perspective de l'ensemble de distribution de la figure 1, certaines pièces étant cachées, et une vue en perspective d'un bus de transfert de l'ensemble de distribution,
- [Fig 4] la figure 4 est une vue en perspective partiellement éclatée de l'ensemble de distribution de la figure 1, certaines pièces étant cachées ;
- [Fig 5] la figure 5 est une représentation schématique de l'ensemble de distribution de la figure 1 ;
- [Fig 6] la figure 6 représente, sur deux inserts a) et b), une vue en perspective et une coupe du dispositif de distribution de la figure 1, certaines pièces étant cachées, le dispositif de distribution étant représenté dans une première configuration ;
- [Fig 7] la figure 7 représente, sur deux inserts a) et b), une vue analogue à la figure 6 b), le dispositif de distribution étant dans deux autres configurations différentes ;
- [Fig 8] la figure 8 représente, sur deux inserts a) et b), une vue analogue à la figure 6 b), le dispositif de distribution étant dans deux autres configurations différentes ;
- [Fig 9] la figure 9 représente, sur deux inserts a) et b), un dispositif de protection appartenant à un ensemble de distribution conforme à un deuxième mode de réalisation de l'invention, le dispositif de protection étant représenté respectivement en perspective et en vue de côté ;
- [Fig 10] la figure 10 représente respectivement, sur deux inserts a) et b), deux éléments du dispositif de protection de la figure 9, et
- [Fig 11] et une vue de côté d'un élément du dispositif de protection de la figure 9, certaines pièces étant cachées.

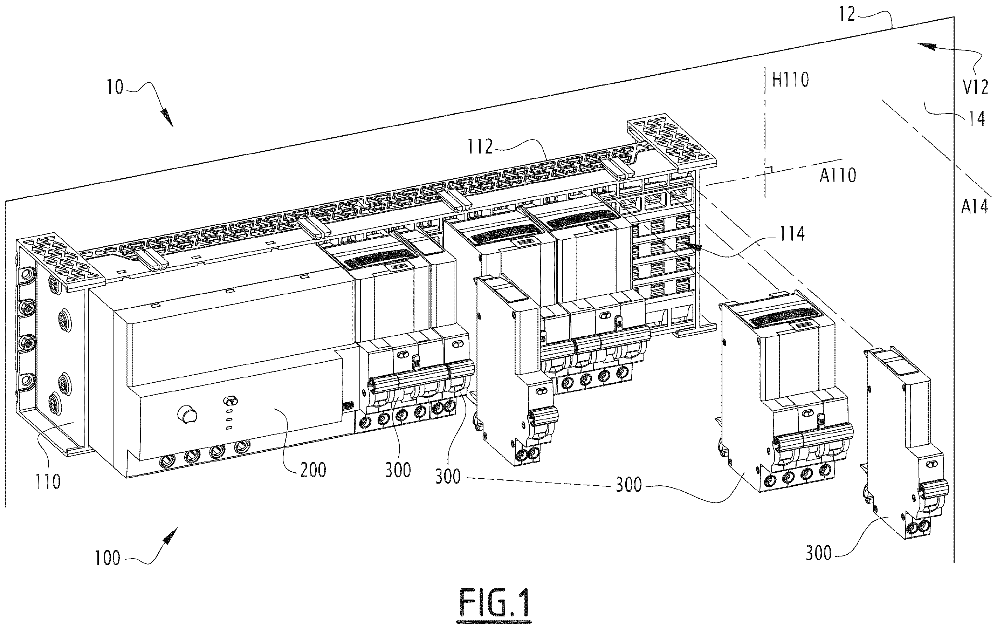

Un tableau électrique 10, conforme à l'invention, est représenté à la figure 1. Le tableau électrique 10 comprend un coffre 12, qui délimite une enceinte V12 et qui présente un fond 14. Le fond 14 s'étant globalement dans un plan orthogonal à un axe de profondeur A14. L'enceinte V12 est avantageusement refermée par une porte, qui n'est pas représentée.

Le tableau électrique 10 comprend un ensemble de distribution 100. L'ensemble de distribution 100 est fixé sur le fond 14 du boitier 12. 1. L'ensemble de distribution 100 est configuré pour distribuer de l'énergie électrique provenant d'une source de puissance à au moins une charge électrique, la source de puissance comprenant un neutre et au moins une phase. Dans l'exemple illustré, la source de puissance est une source triphasée, comprenant un neutre et trois phases. En variante non illustrée, la source de puissance est monophasée, comprenant un neutre et une seule phase. Selon une autre variante, la source de puissance comprend trois phases, et pas de neutre. La source de puissance et la charge électrique, qui ne sont pas représentées, ne font pas partie de l'invention mais servent à en expliquer le contexte de fonctionnement.

L'ensemble de distribution 100 comprend un dispositif de distribution 110, par lequel l'ensemble de distribution 100 est fixé sur le fond 14, un boitier principal 200, qui est assemblé au dispositif de distribution 110, de préférence de manière réversible, et au moins un dispositif de protection 300. Dans l'exemple illustré, l'ensemble de distribution 100 comprend sept dispositifs de protection 300, qui sont ici des boitiers de départ. La suite de la description est faite dans le cas où les dispositifs de protection 300 sont des boitiers de départ, les principes de l'invention étant transposables à d'autres types de dispositifs de protection. Chaque dispositif de protection 300 est assemblé au dispositif de distribution 110 de manière réversible, dans une position montée du dispositif de départ 300. Il est ainsi possible de remplacer, au besoin, le boitier principal 200 en cas de dysfonctionnement du boitier principal 200, tout en conservant les autres éléments de l'ensemble de distribution 100, dispositif de distribution 110 et boitier(s) de départ 300, ce qui est économique. De même, il est possible de remplacer, au besoin, un ou plusieurs des dispositifs de protection 300, par exemple en cas de dysfonctionnement, tout en conservant les autres éléments, dispositif de distribution 110 et boitier principal 200, ce qui est économique.

Le dispositif de distribution 110 présente une forme allongée, qui s'étend selon un axe principal A110. Lorsque l'ensemble de distribution 100 est dans une configuration normale de fonctionnement, l'axe principal A110 est parallèle au fond 14, autrement dit orthogonal à l'axe de profondeur A14. De préférence, l'axe principal A110 est horizontal, comme illustré à la figure 1. On définit un axe de hauteur H110 comme étant un axe orthogonal à la fois à l'axe de profondeur A14 et à l'axe principal A110. La description est faite en regarde de l'orientation des divers éléments tels que représentés sur les figures, sachant qu'il peut en être autrement dans la réalité.

Dans l'exemple de la figure 1, le boitier principal 200 est situé sur la gauche de l'ensemble de distribution 100, les dispositifs de protection 300 étant situé sur la droite du boitier principal 200.

Lorsque l'ensemble de distribution 100 est fixé sur le fond 14, une portion arrière 112 du dispositif de distribution 110 est orientée en regard du fond 14, autrement dit orientée vers une direction arrière de l'ensemble de distribution 100. La direction arrière est ainsi parallèle à l'axe de profondeur A14. On définit également une direction avant comme étant une direction opposée à la direction arrière.

Le dispositif de distribution 110 présente ainsi une face de montage 114, qui est globalement orientée vers l'avant et qui est prévue pour le montage du boitier principal 200 et de chaque dispositif de protection 300.

La portion arrière 112 est réalisée en un matériau électriquement isolant, par exemple en polymère synthétique. La portion arrière 112 présente ici une forme globalement rectangulaire, qui s'étend dans sa plus grande dimension parallèlement à l'axe principal A110. Les petits côtés du rectangle sont ainsi parallèles à l'axe de hauteur H110. Le dispositif de distribution 110 comprend ici deux flasques 116, qui sont réalisés en un matériau électriquement isolant. Les deux flasques 116 sont assemblés aux petits côtés de la portion arrière 112 de manière à former un panier,

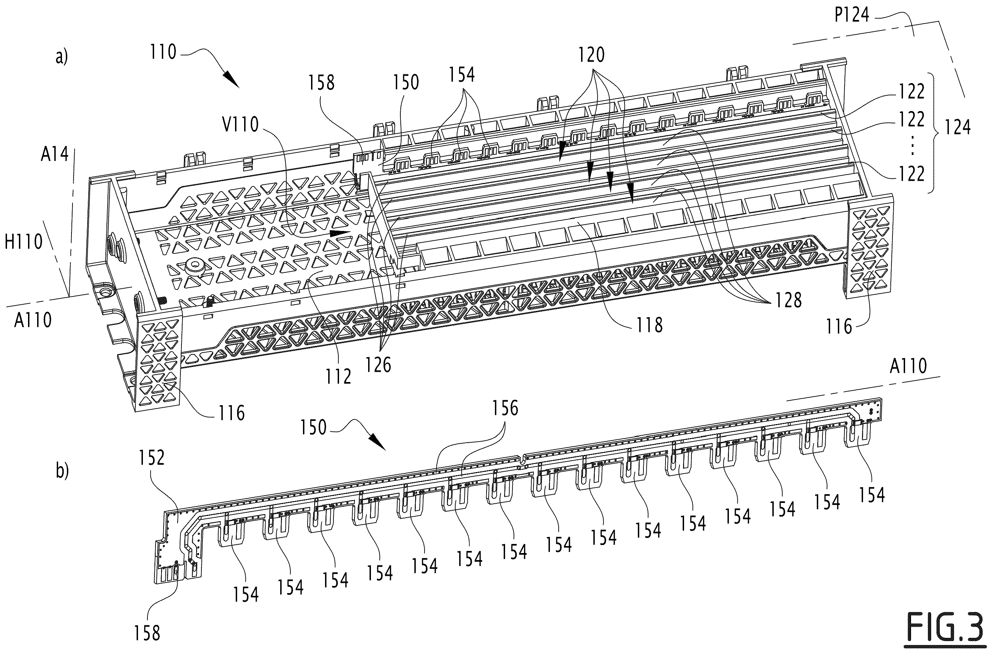

Le dispositif de distribution 110 comprend ici une paroi isolante 118, qui est réalisée en un matériau électriquement isolant et qui est assemblée à la portion arrière 112 et aux flasques 116, de manière à former une cavité V110, comme illustré à la figure 3.

Dans l'exemple illustré, le dispositif de distribution 110 comprend avantageusement un dispositif de refroidissement 400, qui est reçu dans la cavité V110 et qui est prévu pour évacuer une partie de la chaleur générée par le boitier principal 200 lorsque l'ensemble de distribution 100 est en fonctionnement. Le dispositif de refroidissement 400 est ainsi situé d'un côté arrière de la paroi isolante 118, tandis que d'un côté avant de la paroi isolante 118, le côté avant étant orienté à l'opposé du côté arrière, la paroi isolante 118 ménage des sillons 120 prévus pour recevoir plusieurs barres conductrices 122, ici quatre barres conductrices 122. Les barres conductrices 122 forment ensemble un bus de puissance 124 du dispositif de distribution 110 et, par extension, de l'ensemble de distribution 100. Le dispositif de distribution 110 est ainsi un dispositif de distribution de puissance. La portion arrière 112 est préférentiellement ajourée, de manière à favoriser le refroidissement, par convection, du dispositif de refroidissement 400. Le dispositif de distribution 110 forme ainsi une cage autour du dispositif de refroidissement 400. La portion arrière 112 est configurée pour assurer un indice de protection IP20, tel que défini par la norme CEI 60529 - reprise dans la norme EP 60529:1992 -, c'est-à-dire pour empêcher tout contact direct entre un utilisateur et les diverses parties du dispositif de refroidissement 400, qui tendent à s'échauffer.

Les barres conductrices 122 s'étendent parallèlement entre elles selon l'axe principal A110 de l'ensemble de distribution 100 et sont alignées selon l'axe de hauteur H110. Les barres conductrices 122 définissent ensemble un plan de connexion P124, qui est un plan orthogonal à l'axe de profondeur A14, autrement dit parallèle à l'axe de hauteur H110 et à l'axe principal A110. La face de montage 114 est globalement parallèle au plan de connexion P124.

Le dispositif de refroidissement 400 comprend une plaque de contact 410, qui est prévue pour capter une partie de la chaleur dégagée par le boitier principal 200, un radiateur 420, qui est prévu pour dissiper de la chaleur dans l'air ambiant, et au moins un caloduc 430, ici trois caloducs, qui relie la plaque de contact 410 au radiateur 420 et qui est configuré pour transférer au radiateur 420 une partie de la chaleur captée par la plaque de contact 410.

La plaque de contact 410 présente ici une forme de parallélépipède et présente une face de contact 412, qui s'étend parallèlement au plan de connexion P124. La face de contact 412 est configurée pour coopérer, notamment par complémentarité de formes, avec une face arrière 230 du boitier principal 200 en configuration montée sur le dispositif de distribution 110, de manière à favoriser le transfert thermique entre la plaque de contact 410 et le boitier principal 200.

Le radiateur 420 est ici formé d'un ensemble d'ailettes métalliques, qui sont positionnées parallèlement les unes aux autres et qui sont alignées selon l'axe principal A110. Les caloducs 430 relient les ailettes à la plaque de contact 410. De préférence, les caloducs 430 sont des caloducs diphasiques. Par exemple, les caloducs 430 diphasiques comprennent deux tubes coaxiaux, qui sont agencés de manière à favoriser en leur sein une circulation d'un fluide caloporteur changeant de phase, liquide ou gazeuse, en fonction de sa température. De préférence, les caloducs 430 sont rectilignes et sont agencés horizontalement lorsque l'ensemble de distribution 100 est dans une configuration normale de fonctionnement. Autrement dit, l'axe principal A110 est de préférence horizontal.

Ainsi, le radiateur 420 s'étend le long de la zone de connexion du bus de puissance 124, d'un côté arrière du plan de connexion P124. En particulier, le radiateur 420 est situé du côté arrière de la paroi isolante 118, le radiateur 420 étant reçu dans la cavité V110, tandis que la paroi isolante 118 est ouverte vers l'avant de la plaque de contact 410. Autrement dit, la paroi isolante 118 est intercalée entre le bus de puissance 124 et le radiateur 420. La portion de la paroi isolante 118 servant de support aux barres conductrices 122 est de préférence continue, de manière à réduire les risques d'art électrique entre les barres conductrices 122 et le radiateur 420.

Les barres conductrices 122 incluent au moins une barre de phase et, éventuellement, une barre de neutre, la barre de neutre étant associée au neutre de la source de puissance, chaque barre de phase étant associée à une phase respective de la source de puissance. Dans l'exemple illustré, le bus de puissance 124 comprend quatre barres conductrices 122, la source de puissance étant une source triphasée avec un neutre. L'ensemble de distribution 100 présente ici une configuration dite « 3P+N », ou simplement 3PN.

En variante non représentée, la source de puissance est triphasée, avec ou sans neutre, tandis que l'ensemble de distribution ne comprend pas de barre conductrice associée au neutre. Autrement dit, l'ensemble de distribution ne comprend que trois barres de phases, chacune associée à une phase respective de la source de puissance. L'ensemble de distribution est alors dans une configuration dite 3P.

Les principes de l'invention sont transposables quel que soit le nombre de phases de la source de puissance. Selon une autre variante non illustrée, la source de puissance est monophasée, c'est-à-dire ne comprend que le neutre et une seule phase. Les barres conductrices incluent alors une seule barre de phase, et la barre de neutre. L'ensemble de distribution est alors dans une configuration dite P+N, ou simplement PN. Quelles que soient les configurations, on a toujours plusieurs barres conductrices, qui incluent au moins une barre de phase, et éventuellement une barre de neutre.

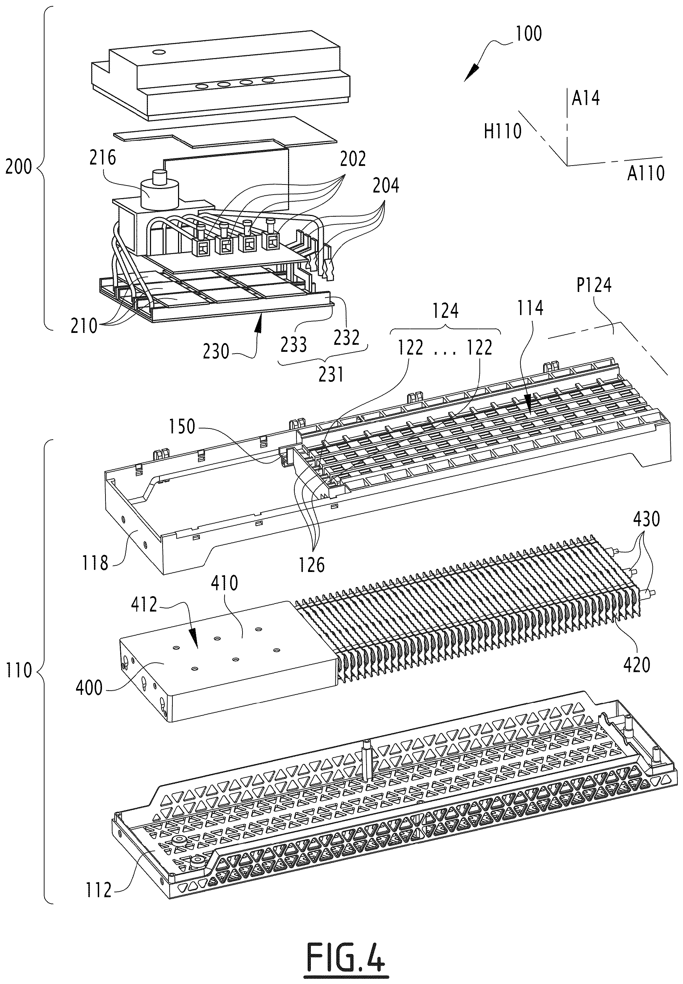

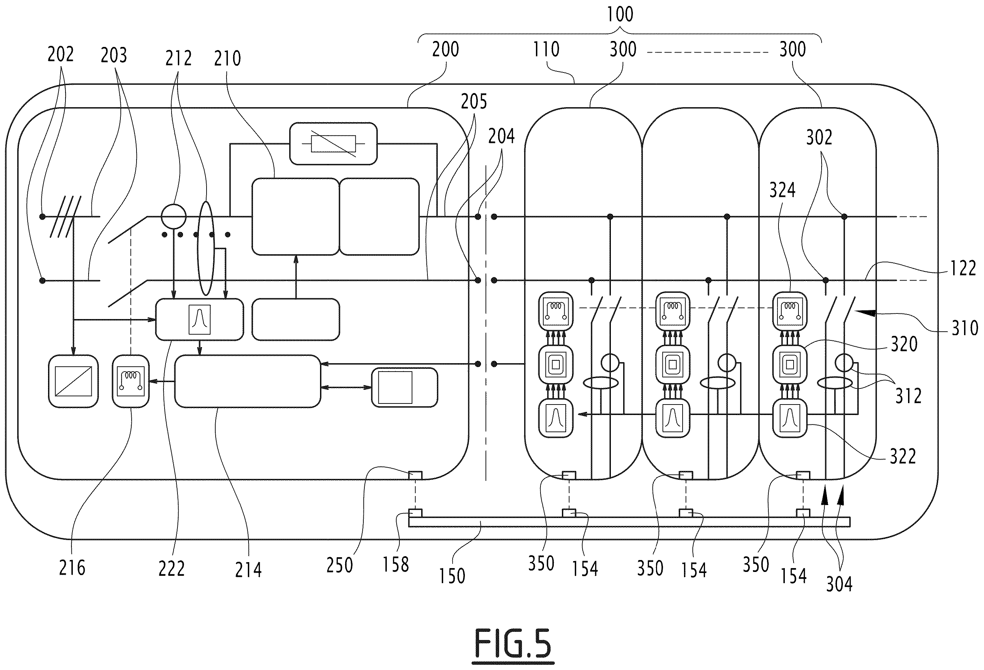

On décrit à présent le boitier principal 200, notamment en référence aux figures 4 et 5. Sur la figure 5, le circuit d'une seule phase est représenté, les trois phases étant représentées, selon une convention connue, par trois traits parallèles en travers du circuit.

Le boitier principal 200 comprend des bornes d'entrées 202, qui sont configurées pour être relié au neutre et à chaque phase de la source de puissance, et des bornes de sorties 204, qui sont configurées pour être reliées aux barres conductrices, chaque borne de sortie étant associée à une barre conductrice respective et à une borne d'entrée respective. Les bornes d'entrée 202 sont ici des bornes à vis. Avantageusement, les bornes de sortie 204 sont des pinces de raccordement, qui sont chacune prévus pour la connexion réversible à une barre conductrice122 respective, selon un mouvement de connexion orienté vers l'arrière de l'ensemble de distribution 100. Ainsi, au cours du mouvement de à la connexion des bornes de sortie 204 aux barres conductrices 122, la face arrière du boitier principal 200 vient en appui contre la face de contact 412.

Pour chaque borne d'entrée 202, le boitier principal comporte une ligne d'entrée 203 correspondante, qui est reliée à la borne d'entrée 202 correspondante, et une ligne de sortie 205, qui est reliée à la borne de sortie 204 associée.

Le boitier principal 200 comprend des moyens de coupure statiques 210, qui sont commutables entre une configuration passante, dans laquelle chaque borne d'entrée 202 associée à une phase de la source de puissance est électriquement reliée à la borne de sortie 204 associée, le boitier principal 200 étant dans une configuration passante, et une configuration de coupure, dans laquelle le passage d'un courant électrique entre la borne d'entrée 202 et la borne de sortie 204 associée est empêché, le boitier principal 200 étant dans une configuration de coupure.

Les moyens de coupure statiques 210 sont des interrupteurs de puissance base de composants semi-conducteurs, de préférence des transistors à effet de champ à grille isolée, appelés JFET ou MOSFET, et sont ainsi dits « statiques » par opposition aux moyens de coupure à contact mobile. Les moyens de coupure statiques 210 sont branchés en série entre la ligne d'entrée 203 et la ligne de sortie 205 associée. Les moyens de coupure statique 210 sont représentés schématiquement aux figures 4 et 5.

En fonctionnement, les moyens de coupure 210 dégagent de la chaleur, de l'ordre de quelques dizaines de Watts. Les moyens de coupure 210 sont avantageusement disposés de manière à favoriser le transfert d'au moins une partie de la chaleur dégagée vers le dispositif de refroidissement 400.

En particulier, les moyens de coupure 210 sont avantageusement agencés contre une paroi arrière 231 du boitier principal 200, de préférence en contact surfacique contre la paroi arrière 231. La paroi arrière 231 est par exemple présente lorsque le boitier principal 200 est démontable de la plaque de contact 410. La paroi arrière 231 ménage la face arrière 230, la face arrière 230 étant orientée à l'opposé des moyens de coupure 210. La paroi arrière 231 est ainsi intercalée entre les moyens de coupure 210 et la plaque de contact 410 lorsque la boitier principal 200 est monté sur le dispositif de distribution 110, de manière qu'une partie de la chaleur générée par les moyens de coupure 210 en fonctionnement est transférée à la plaque de contact 410 au travers de la paroi arrière.

La paroi arrière 231 est réalisée en un matériau thermiquement conducteur et électriquement isolant. Dans l'exemple illustré, la paroi arrière 231 est formée d'un assemblage d'un élément isolant 232, électriquement isolant, réalisé en matériau polymère synthétique, et d'une plaque de cuivre 233, qui apporte rigidité à l'ensemble tout en favorisant la conductivité thermique, la plaque de cuivre 233 ménageant la face arrière 230 et étant en appui contre la plaque de contact 410 lorsque le boitier principal 200 est monté sur le dispositif de distribution 110. En variante non illustrée, la plaque de cuivre 233 est omise, aussi la face arrière 230 est directement formée par l'élément isolant 232.

Le boitier principal 200 comprend des moyens de détection principaux 212, qui sont configurés pour mesurer des grandeurs électriques aux bornes de sortie et pour détecter un défaut électrique en fonction des valeurs mesurées. Les moyens de détection principaux 212 sont ici représentés schématiquement par des boucles de mesures, qui sont ici agencés sur les lignes de sortie 205. La représentation schématique des moyens de détection principaux ne limite pas le type de défauts électriques que les moyens de détection principaux 212 sont aptes à détecter.

Le boitier principal 200 est configuré pour passer de la configuration passante à la configuration de coupure lorsque les moyens de détection principaux 212 détectent un premier défaut électrique, en particulier un défaut de court-circuit.

Le boitier principal 200 comprend une unité de contrôle 214, ou ECU en anglais pour *Electronic Control Unit,* qui est configurée pour piloter les moyens de coupure statiques 210, autrement dit pour faire commuter les moyens de coupure statiques 210 entre la configuration passante et la configuration de coupure. L'unité de contrôle 214 est également configurée pour analyser les valeurs mesurées par les moyens de détection principaux 212 et pour déterminer, en fonction de critères prédéfinis correspondant à un type prédéterminé de défaut électrique, la présence d'un défaut électrique du type prédéterminé. À la figure 5, l'utilisation de critères prédéfinis est représentée schématiquement par la présence d'un filtre dit « primaire » 222, le filtre primaire 222 étant est intercalé entre les moyens de détection principaux 212 et l'unité de contrôle 214.

Ainsi, les moyens de détection principaux 212 sont configurés pour détecter les défauts électriques de type courts-circuits. Par exemple, les moyens de détection principaux 212 incluent des capteurs de courant, en particulier un capteur de courant par phase, tandis l'unité de contrôle 214 est configurée pour analyser les mesures réalisées par les capteurs de courant et pour détecter un court-circuit.

De préférence, les moyens de détection principaux 212 incluent aussi un dispositif de détection de courant différentiel. Il existe plusieurs types de défauts différentiels, qui sont définis notamment dans la norme IEC 60755:2017. En particulier, les types de défauts électriques incluent le fait que le signal électrique soit redressé, que le signal inclut une composante à haute fréquence, le calibre - par exemple 30 mA ou 300 mA -... On comprend que le filtre primaire 222 définit des critères de détection des défauts électriques par l'unité de contrôle 214 du boitier principal 200. De préférence, le filtre primaire 222 définit des critères de détection d'un type de défaut différentiel prédéterminé, le défaut préférentiel prédéterminé étant choisi parmi les défauts définis dans la norme IEC 60755:2017.

La description qui suit correspond au cas préféré où le défaut électrique considéré est un court-circuit, les principes de l'invention étant transposables à d'autres types de défauts électriques. On définit un délai de coupure ΔC comme étant un intervalle de temps entre l'instant de la détection du défaut électrique et le passage en configuration de coupure. Le délai de coupure ΔC inclut ainsi le temps nécessaire pour analyser les mesures réalisées par les moyens de détection principaux, le temps nécessaire pour envoyer un ordre d'ouverture aux moyens de coupure statiques 210, et le temps de coupure des moyens de coupure statiques 210 une fois que l'ordre d'ouverture est envoyé. Le temps de coupure des moyens de coupure statiques 210 dépend de la structure des moyens de coupure statiques et est inférieur à 1 microseconde - µs -. Ainsi le délai de coupure ΔC est essentiellement lié au fonctionnement de l'unité de contrôle 210. Typiquement, le délai de coupure ΔC est de l'ordre de la microseconde ou de quelques dizaines de microsecondes, par exemple compris entre 5 µs et 500 µs.

De préférence, le boitier principal 202 comprend aussi, pour chaque borne d'entrée 202, un dispositif de coupure générale 216, qui est un dispositif de coupure à contacts séparables, ici un sectionneur. Le dispositif de coupure générale 216 est piloté par l'unité électronique de contrôle 214 et permet déconnecter électriquement la source de puissance de l'ensemble de distribution 100, par exemple en cas de dysfonctionnement des moyens de coupure statiques 210. Le dispositif de coupure générale 216 est intercalé chaque borne d'entrée 202 et les moyens de coupure statiques 210.

Avantageusement, le dispositif de distribution 110, et par extension l'ensemble de distribution 100, comprend aussi un bus de transfert 150. Le bus de transfert 150, qui est représenté isolément à la figure 3 b), est prévu pour le fonctionnement pour alimenter en énergie chaque dispositif de protection 300 en position montée, c'est-à-dire connecté aux barres conductrices 122. Le bus de transfert 150 est donc ici un bus de transfert d'énergie, autrement dit un bus d'alimentation, qui est distinct du bus de puissance 124. Selon un exemple illustratif, le bus de transfert 150 fonctionne sous une tension de quelques dizaines de Volts, par exemple 50 V en continu, tandis que le bus de puissance 124 fonctionne sous une tension de 400 V en triphasé alternatif. Le bus de transfert 150 est ici une pièce distincte, qui est assemblée au reste du dispositif de distribution 110.

Le bus de transfert 150 comprend un corps 152, qui est réalisé en un matériau électriquement isolant, qui présente une forme allongée s'étendant le long du bus de puissance 124. Ainsi le bus de de transfert 150 s'étend le long de l'axe principal A110.

Le bus de transfert 150 définit plusieurs zones de montage 154, qui sont prévues pour être connectées à chaque dispositif de protection en position montée, les zones de montage 154 étant réparties, de préférence régulièrement, le long de l'axe principal A110 et étant chacune associée à une position unique le long de l'axe principal A110. Le bus de transfert 150 comprend préférentiellement quinze zones de montage 154, qui sont ici espacées les unes des autres d'un pas de 18 mm. D'autres pas sont bien entendu possibles. En variante non représentée, les zones de montages 154 sont espacées les unes des autres d'un pas de 9 mm.

Le bus de transfert 150 comprend au moins deux lignes de transfert 156, qui s'étendent le long du corps 152 est qui sont configurées pour être électriquement connectées à chaque dispositif de protection 300 en position montée. Les lignes de transfert 156 sont ici des lignes d'alimentation.

Le bus de transfert 150 comprend également une zone de connexion 158, qui est prévue pour la connexion du boitier principal 200 en position montée sur le dispositif de distribution 110. Par exemple, le boitier principal 200 comprend un bornier complémentaire 250, qui est configuré pour coopérer avec la zone de connexion 158, de sorte que le boitier principal est électriquement connecté aux lignes de transfert 156. Dans l'exemple préférentiel illustré, le boitier principal 200 prélève de l'énergie électrique nécessaire à l'alimentation du bus de transfert 150 sur le neutre et les phases de la source de puissance, entre les moyens de coupure statique 210 et le dispositif de coupure générale 216, l'énergie électrique ainsi fournie étant à disposition des dispositifs de protection 300 pour leur fonctionnement.

Le bus de transfert 150 est ici réalisé par une carte de circuit imprimé, les lignes de transfert 156 étant des pistes conductrices ménagées en surface de la carte, tandis que les zones de montage 154 et la zone de connexion 158 sont des pattes ménagées dans le substrat de la carte. Dans l'exemple illustré, le bus de transfert 150 intègre avantageusement un bus de communication entre le boitier principal 200 et chaque dispositif de protection 300.

On décrit à présent les dispositifs de protection 300.

Chaque dispositif de protection 300 comprend ainsi un bornier d'arrivée qui est connectable aux barres conductrices 122 de manière réversible et qui comprend au moins deux bornes d'arrivée 302, chaque borne d'arrivée 302 étant configurée pout être électriquement connectée à une barre conductrice 122 respective. Pour chaque dispositif de protection 300, les bornes d'arrivée 302 qui incluent une borne d'arrivée neutre, qui est configurée pour être électriquement connectée à la barre neutre, et entre une et trois autres bornes d'arrivée, qui sont chacune configurées pour être connectée à une barre de phase respective. Chaque dispositif de protection 300 est configuré pour être monté, de manière réversible, sur le bus de puissance 114, de sorte que chaque borne d'arrivée 302 est électriquement reliée à la barre conductrice 122 correspondante.

Chaque dispositif de protection 300 comprend aussi un bornier de départ, qui est configuré pour être connecté à une charge électrique et qui comprend des bornes de départ 304, chaque borne de départ 304 étant respectivement associée à une borne d'arrivée 302 respective. Les bornes de départ 304 sont représentées schématiquement à la figure 5.

Dans l'exemple non limitatif illustré, les dispositifs de protection 300 présentent des largeurs différentes, la largeur étant mesurée selon l'axe principal A110. Ainsi les dispositifs de protection 300 sont ici répartis en deux sous-groupes, qui correspondent à deux largeurs différentes, avec des dispositifs de protection 300 fins et des dispositifs de protection 300 larges, qui sont sensiblement trois fois plus larges que les dispositifs de protection 300 fins. D'autres largeurs de dispositifs de protection 300 sont bien entendu envisageables. La largeur des dispositifs de protection 300 est de préférence un multiple du pas entre chaque zone de montage 154 du bus de transfert 150, soit ici 18 mm. En variante non représentée, les dispositifs de protection 300 ont une largeur égale à un multiple de 9 mm.

Dans l'exemple illustré, un dispositif de protection 300 configuré pour alimenter une charge électrique monophasée présente avantageusement une largeur de 18 mm, tandis qu'un dispositif de protection 300 configuré pour alimenter une charge électrique triphasée présente une largeur de trois fois 18 mm, soit 54 mm.

Les dispositifs de protection 300 les plus fins sont configurés pour être connectés à deux barres conductrices 122, incluant une barre neutre et une barre de phase, tandis que les dispositifs de protection 300 larges sont configurés pour être connectés à quatre barres conductrices 122. Les principes de l'invention sont applicables quel que soit le nombre de phases auxquelles sont connectés chacun des dispositifs de protection 300.

De préférence, le dispositif de distribution 110 est prévu pour recevoir cinq dispositifs de protection 300, qui comprennent chacun quatre bornes d'arrivées, autrement dit cinq dispositifs de protection 300 larges. Selon un exemple non illustré, l'ensemble de distribution 100 comprend cinq dispositifs de protection 300, qui comprennent chacun quatre bornes d'arrivées 302. En corolaire, le dispositif de distribution 110 est également prévu pour recevoir quinze dispositifs de protection 300 fins comprenant chacun deux bornes d'arrivée 302.

Les barres conductrices 122 comprennent chacune :
- une portion d'alimentation 126, qui est configurée pour être connectée à une borne de sortie 204 associée du boitier principal 200 dans une configuration montée du boitier principal, et
- une portion de connexion 128, qui s'étend d'un même côté de la portion d'alimentation 126. Les portions de connexion 128 sont géométriquement situées d'un côté avant du plan de connexion P124 et définissent ensemble une zone de connexion du bus de puissance 124.

À la figure 4, seules les portions d'alimentation 126 des barres conductrices 122 sont visibles, les portions de connexion 128 étant cachées. La zone de connexion est configurée pour recevoir au moins un dispositif de protection 300, de sorte que le dispositif de protection est relié au bus de puissance 124. Le dispositif de protection 300 est alors propre à être connecté à une charge électrique, de manière à alimenter la charge électrique en puissance électrique.

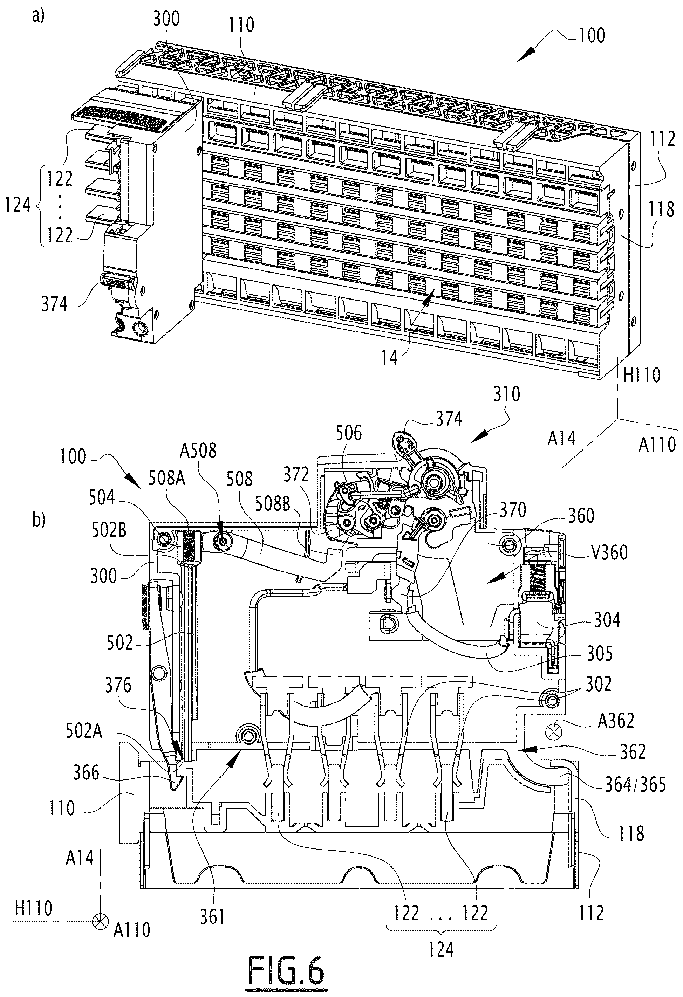

Chaque dispositif de protection 300 comprend un mécanisme de commutation 310. Le mécanisme de commutation est ici un mécanisme électromécanique, qui est analogue au mécanisme de commutation décrit dans EP-4 064 317-A1. Chaque Le mécanisme de commutation 310 est intercalé entre chaque borne d'arrivée 302 et la borne de départ 304 correspondante. Le mécanisme de commutation 310 est décrit plus loin, en référence aux figures 6 à 8.

Chaque dispositif de protection 300 comprend des moyens de détection secondaires 312, qui sont configurés pour mesurer des grandeurs électriques aux bornes de départ correspondantes et pour détecter au moins un défaut électrique d'un type prédéterminé, c'est-à-dire correspondant à des critères de détection prédéterminés. Les moyens de détection secondaires 312 sont ici représentés schématiquement par des boucles de mesures, qui sont ici agencés sur les fils reliant les bornes d'arrivée 302 aux bornes de départ 304. La représentation schématique des moyens de détection secondaires 312 ne limite pas le type de défauts électriques que les moyens de détection secondaires sont aptes à détecter. Ainsi, les moyens de détection secondaires 312 sont configurés pour détecter les défauts électriques de type courts-circuits.

Par exemple, les moyens de détection secondaires 312 incluent des capteurs de courant, en particulier un capteur de courant par phase, tandis que le dispositif de protection 300 comprend un microcontrôleur 320, qui reçoit les mesures des capteurs de courant et qui est apte à déterminer si le ou les courants mesurés dépassent un seuil de court-circuit.

Le microcontrôleur 320 est alimenté par l'intermédiaire du bus de transfert 150. À cet effet, chaque dispositif de protection 300 comprend un bornier de transfert 350, qui comprend des bornes de transfert - non représentées -, le bornier de transfert 350 étant configuré pour être connecté au bus de transfert 150 de sorte que chaque borne de transfert est électriquement connectée à une ligne de transfert 156 respective. Le bornier de transfert 350 est donc ici un bornier d'alimentation. Les bornes de transfert sont différentes des bornes d'arrivée 302 ou des bornes de départ 304.

De préférence, les moyens de détection secondaires 312 incluent aussi un dispositif de détection de courant différentiel. De préférence, le microcontrôleur 320 est également configuré pour évaluer la mesure de courant différentiel à l'aide d'un filtre dit « secondaire » 322, le filtre secondaire 322 étant préalablement enregistré dans une mémoire du microcontrôleur 320 du dispositif de protection 300 et étant adapté pour la détection d'un défaut différentiel.

On comprend que le filtre secondaire 322 définit les critères de détection des défauts électriques détectés par le microcontrôleur 320 du dispositif de protection 300. De préférence, le filtre secondaire 322 définit des critères de détection d'un type de défaut différentiel prédéterminé, qui est choisi parmi les défauts définis dans la norme IEC 60755:2017.

Chaque microcontrôleur 320 est alimenté en énergie électrique de fonctionnement par l'intermédiaire du bus de transfert 150, indépendamment de la configuration, armée ou déclenchée, du mécanisme de commutation 310 du boitier départ 300.

Chaque dispositif de protection 300 comprend ici un actionneur 324, qui est configuré pour déplacer le mécanisme de commutation 310 dans la position ouverte lorsque l'actionneur reçoit un signal de déclenchement, le microcontrôleur 320 étant configuré pour envoyer à l'actionneur 324 le signal de déclenchement lors de la détection d'un défaut électrique, notamment un défaut de court-circuit ou un défaut différentiel. Plus généralement, chaque dispositif de protection 300 est configuré pour passer de la configuration fermée à la configuration ouverte lorsque les moyens de détection secondaires 312 - et par extension le microcontrôleur 320 - détectent un défaut électrique.

On décrit le fonctionnement de l'ensemble de protection 100 dans le cas d'un défaut de court-circuit, ce fonctionnement étant transposable à d'autres types de défauts électriques, notamment aux défauts différentiels. On définit un délai d'ouverture ΔO comme étant un intervalle de temps entre l'instant de la détection du défaut électrique par le microcontrôleur 320 et le début du mouvement des contacts mobiles du mécanisme de commutation 310, de la position fermée vers la position ouverte. Dans l'exemple illustré, le délai d'ouverture ΔO inclut donc le temps pour que le microcontrôleur 320 envoie l'ordre de coupure à l'actionneur 324. Typiquement, le délai d'ouverture ΔO est de l'ordre de la milliseconde, par exemple de 2 ms à 9 ms.

Dans une configuration minimale de l'ensemble de distribution 100, l'ensemble de distribution comprend le dispositif de distribution 110, sur lequel sont montés le boitier principal 200 et un seul dispositif de protection 300. On suppose que l'ensemble de distribution 100 est relié à une source de puissance, par l'intermédiaire des bornes d'entrée 202, tandis qu'une charge électrique est connectée aux bornes de départ 304.

Dans une configuration de fonctionnement normal, le boitier principal 200 est initialement dans la configuration passante, tandis que le dispositif de protection 300 est initialement dans la configuration fermée. Ainsi, les bornes de départ 304 sont chacune électriquement reliées à une borne de sortie 204 respective, par l'intermédiaire de la barre conductrice 122 associée. Lorsqu'un défaut électrique survient, par exemple en cas d'un court-circuit lié à une défaillance de la charge électrique, le défaut électrique est détectable à la fois par le boitier principal 200, au moyen des moyens de détection principaux 212, et par le dispositif de protection 300, au moyen des moyens de détection secondaires 312.

Autrement dit, les critères de détection de défaut électrique utilisés du boitier principal 200 sont identiques au critère de détection de défaut électrique utilisés par le dispositif de protection 300 considéré.

De nombreux types de défauts électriques sont envisageables. À titre d'illustration, en cas de court-circuit, un courant de court-circuit peut atteindre plusieurs fois, par exemple 5 fois, la valeur d'un courant nominal de fonctionnement. D'autres exemples de défauts électriques incluent les surintensités, les défauts de courant différentiels, etc. En comparaison avec les défauts de courts circuits, les courants électriques impliqués dans le cas des surintensités ou des défauts différentiels sont bien moindres, par exemple inférieurs à 1,2 fois la valeur du courant nominal de fonctionnement.

Dans l'exemple illustré, les critères de détection sont définis par les filtres de détection, soit ici le filtre primaire 222 pour le boitier principal 200, et le filtre secondaire 322 pour le dispositif de protection 300. On suppose que le filtre primaire 222 et le filtre secondaire 322 définissent fonctionnellement les mêmes critères de détection, autrement dit que le filtre primaire 222 et que le filtre secondaire 322 sont fonctionnellement identiques l'un à l'autre, de sorte que le boitier principal 200 et le dispositif de protection 300 sont configurés pour détecter des défauts électriques de courts-circuits selon les mêmes critères. Le boitier principal 200 et le boitier secondaire 300 sont ainsi naturellement synchronisés pour ce qui est de la détection des défauts électriques de courts-circuits.

L'ensemble de distribution 100 est configuré pour que, lorsqu'un défaut électrique correspondant aux critères du filtre primaire 222 et du filtre secondaire 322 survient :
- le dispositif de protection 300 détecte le défaut électrique au moyen des moyens de détection secondaire 312, puis le microcontrôleur 320 du dispositif de protection commande le passage en position ouverte du mécanisme de commutation 310,
- tandis que le boitier principal 200 détecte le même défaut électrique au moyen des moyens de détection principaux 212, puis l'unité de contrôle 214 du boitier principal 200 commande le passage des moyens de coupure 210 en configuration de coupure.

Compte tenu de la proximité du boitier principal 300 avec le dispositif de protection 300, on considère que la détection du même défaut électrique par le boitier principal 200 et par le dispositif de protection 300 est simultanée.

L'ensemble de distribution 100 est configuré pour que le boitier principal 200 passe dans la configuration de coupure avant que le premier boitier ne passe de la configuration fermée à la configuration ouverte. Autrement dit, le délai de coupure ΔC est inférieur au délai d'ouverture ΔO, de sorte que lorsque les contacts mobiles du mécanisme de commutation 310 commencent à se déplacer de la position fermée vers la position ouverte, alors aucun courant ne circule dans le bus de puissance 114. Les contacts mobiles du mécanisme de commutation 310 s'ouvrent sans qu'il y ait génération d'arc électrique, ce qui permet de réduire l'usure des contacts mobiles et contribue à la durabilité des dispositifs de protection 300. Grâce à l'invention, les dispositifs de protection 300 sont protégés par le boitier principal 200 en cas de défauts électrique, en particulier en cas de courts-circuits. En corollaire, les dispositifs de protection 300, et en particulier le mécanisme de commutation 310, n'ont pas besoin d'être dimensionnés pour résister aux coupures de courants courts-circuits, qui impliquent les énergies les plus élevées parmi les divers types de défauts électriques considérés. Il est ainsi possible de fabriquer des dispositifs de protection 300 moins onéreux, qui sont en outre faciles à changer grâce à la structure modulaire de l'ensemble de distribution 100

En variante non représentée, le boitier maitre 200 comprend une protection autonome contre les défauts électriques de type surintensité et/ou différentiel. Par exemple, un seuil de surintensité tel que défini au niveau du boitier principal est égale à la somme des intensités nominales de chaque dispositif esclave.

Une fois que le dispositif de protection 300 est en configuration ouverte, le boitier principal 200 est configuré pour passer de la configuration de coupure à la configuration passante au bout d'un temps d'attente ΔW prédéterminé, le temps d'attente ΔW étant supérieur au délai d'ouverture.

On considère le cas où l'ensemble de distribution comprend deux dispositifs de protection 300 ou plus, les deux dispositifs de protection 300 incluant un premier boitier et un deuxième boitier, qui sont conjointement connectées aux barres conductrices 122. Autrement dit, les deux dispositifs de protection 300 sont montés sur le même dispositif de distribution 110. En fonctionnement normal de l'ensemble de distribution 100, le boitier principal 200 est initialement dans la configuration passante, tandis que le premier boitier 300 et le deuxième boitier 300 sont chacun initialement dans la configuration fermée. On suppose que le premier boitier 300 et le deuxième boitier 300 sont chacun connectés à une charge électrique respective.

Lorsqu'un défaut électrique survient aux bornes de départ 300 du premier boitier 300, par exemple suite à une défaillance de la charge électrique connectée au premier boitier 300, le premier boitier 300 de départ détecte ce défaut électrique au moyen des moyens de détection secondaire 312 du premier boitier 300 et, simultanément, le boitier principal 200 détecte aussi ce défaut électrique au moyen des moyens de détection principaux 212. Comme précédemment, le boitier principal 200 passe dans la configuration de coupure avant que le premier boitier 300 ne passe de la configuration fermée à la configuration ouverte, tandis que le deuxième boitier 300 reste dans la configuration fermée.

Ensuite, le boitier principal 200 passe de la configuration de coupure à la configuration passante au bout du temps d'attente ΔW, le deuxième boitier 300 restant dans la configuration fermée. Le temps d'attente ΔW est suffisamment court pour que la rupture d'alimentation subie par la charge électrique associée au deuxième boitier 300 n'ait pas d'impact négatif. En pratique, le temps d'attente ΔW est inférieur à 20 ms, de préférence inférieur à 15 ms, de préférence encore inférieur à 10 ms.

Dans l'exemple illustré, chaque dispositif de protection 300 comprend un microcontrôleur 320, qui analyse les mesures des moyens de détection secondaires 312 et détermine la présence d'un défaut électrique, en particulier un défaut différentiel. Cela nécessite que le microcontrôleur soit alimenté par une source d'énergie électrique, ici par l'intermédiaire du bus de transfert 150. Les principes de l'invention sont transposables au cas où les dispositifs de protection 300 ne comprennent pas de microcontrôleur, l'actionneur 324 étant par exemple directement alimenté par le différentiel de courant mesuré par les moyens de détection secondaires 312.

Dans l'exemple illustré, le bus de transfert 150 est un bus d'alimentation, qui est configuré pour fournir de l'énergie de fonctionnement à chaque dispositif de protection 300, en particulier à l'alimentation du microcontrôleur 320 de chaque dispositif de protection 300. En variante non illustrée, le bus de transfert 150 sert aussi au transfert des données entre chaque microcontrôleur 320 et l'unité de contrôle du boitier principal 200. Par exemple, le transfert d'information passe par les mêmes lignes de transfert 156 utilisées pour le transfert d'énergie. En alternative non illustrée, le bus de transfert 150 comprend des lignes de transfert d'information additionnelles, qui sont différentes des lignes de transfert 156 et qui sont ménagées sur le bus de transfert 150.

On décrit à présent, en référence aux figures 6 à 8, le montage et le démontage des dispositifs de protection 300 sur le dispositif de distribution 110. Un seul dispositif de protection 300, conforme à un premier mode de réalisation, est représenté sur les figures. Ce qui est valable pour ce dispositif de protection 300 est transposables aux autres dispositifs de protection 300 ou à d'autres dispositifs de protection électrique, notamment à des dispositifs de protection présentant une largeur différente ou comprenant un nombre de bornes d'arrivée 254 différent.

Le dispositif de protection 300 comprend un boitier 360, qui est configuré pour être monté, de manière réversible et selon un mouvement de montage, sur le dispositif de distribution 110. Le dispositif de protection 300 est alors dans une position montée, dans laquelle une face arrière 361 du boitier 360 est orientée vers le dispositif de distribution 110, comme illustré sur la figure 6. Les bornes d'arrivée 302 dépassent de la face arrière 361 et sont connectées électriquement aux barres conductrices 122.

Le long d'un premier bord 362 de la face arrière 361, le boitier 360 comprend un organe de fixation 364, qui inclut ici une portion 365 de forme courbe, de préférence en arc de cercle. L'organe de fixation 364 est prévu pour coopérer, notamment par complémentarité de forme, avec le dispositif de distribution 110, de sorte que le mouvement de montage du dispositif de protection 300 est un mouvement de rotation autour d'un axe de montage A362 situé à proximité du premier bord 362, la face arrière 361 du dispositif de protection 300 étant rapprochée du dispositif de distribution 110. Dans l'exemple illustré, l'organe de fixation 364 présente une forme en arc de cercle, avec une courbure sensiblement constante, l'axe de montage A362 étant sensiblement situé au centre de courbure de l'organe de fixation. D'autres agencements sont bien entendu possibles. L'axe de montage A362 est préférentiellement parallèle à l'axe principal A110. De préférence, l'axe de montage A362 est situé sur le bas du dispositif de distribution 110 lorsque l'ensemble de protection 100 est dans une configuration normale d'utilisation, fixé au fond 14 d'un tableau électrique 10.

Avantageusement, l'organe de fixation 364 inclut aussi un organe de retenue 366, ici un ergot, qui est monté sur ressort et qui est situé à distance du premier bord 362. L'ergot est ici situé à proximité d'un deuxième bord 368 de la face arrière 361, le deuxième bord 368 étant situé à l'opposé du premier bord 362. L'organe de retenue 366 est configuré pour coopérer, notamment par complémentarité de formes, avec le dispositif de distribution 110, de manière à maintenir le dispositif de protection 300 en position montée. L'organe de retenue 366 est avantageusement réversible, à la main et sans outil, de sorte qu'un utilisateur puisse facilement démonter le dispositif de protection 300 du dispositif de distribution 110. En partant de la position montée du dispositif de protection 300, un mouvement de démontage est un mouvement opposé au mouvement de montage, c'est-à-dire un mouvement de rotation autour de l'axe de montage A362, la face arrière 361 du dispositif de protection 300 étant éloignée du dispositif de distribution 110.

Sur les figures 6 à 8, boitier 360 est partiellement omis, de manière à révéler l'intérieur du dispositif de protection 300, en particulier le mécanisme de commutation 310. Chaque borne d'arrivée 302 est reliée à la borne de départ 304 correspondante par un chemin de conduction 305. Un seul chemin de conduction 305 est représenté sur les figures, les principes de l'invention, décrits en relation avec ce chemin de conduction 305, étant bien entendu transposables aux autres chemins de conduction du dispositif de protection 300.

Ainsi, pour au moins un chemin de conduction 305 du dispositif de protection 300, le mécanisme de commutation 310 comprend un contact mobile 370, qui est intercalé entre la borne d'arrivée 302 et la borne de sortie 304 correspondants à ce chemin de conduction 305. Par extension, le contact mobile 370 forme une partie du chemin de conduction 305 et fait ainsi partie du chemin de conduction 305.

Le contact mobile 370 est mobile par rapport au boîtier 360, entre une position de conduction, dans laquelle le premier contact mobile 362 connecte électriquement la borne d'arrivée 302 considérée à la borne de départ 304 correspondante, et une position d'isolement, dans laquelle la borne d'arrivée 302 et la borne de départ 304 sont électriquement isolées l'une de l'autre. Lorsque le contact mobile 370 est en position de conduction, le dispositif de protection 300 est dans une configuration fermée, tandis que lorsque le contact mobile 370 est en position d'isolement, le dispositif de protection 300 est dans une configuration ouverte.

Le mécanisme de commutation 310 est configuré pour basculer entre :
- une configuration armée, dans laquelle le mécanisme de commutation 310 met le contact mobile 370 en position de conduction, et
- une configuration déclenchée, dans laquelle le mécanisme de commutation 310 met le contact mobile 370 en position d'isolement.

De manière connue, comme décrit notamment dans EP-4 064 317-A1, le mécanisme de commutation 310 comprend un déclencheur 372, qui est mobile entre une position neutre et une position excitée, le déclencheur 372 étant configuré pour faire basculer le mécanisme de commutation en configuration déclenchée lorsque le déclencheur est en position excitée. Sur la figure 6 b), le mécanisme de commutation 310 est représenté en configuration armée, le déclencheur 370 étant en position neutre.

Le mécanisme de commutation 310 comprend avantageusement une manette 374, qui est prévue pour qu'un utilisateur puisse déclencher manuellement le mécanisme de commutation 310, c'est-à-dire faire basculer le mécanisme de commutation 310 de la configuration armée vers la configuration déclenchée. La manette 374 permet également de réarmer le mécanisme de commutation 310, c'est-à-dire faire basculer le mécanisme de commutation 310 de la configuration déclenchée vers la position armée. Le réarmement du mécanisme de commutation 310 est empêché lorsque le déclencheur 372 est en position excitée.

Le dispositif de protection 300 comprend un mécanisme de sécurité 500, qui inclut :
- une portion d'appui 502, qui est mobile entre une position reculée et une position avancée, la portion d'appui étant accessible au travers d'une lumière 376 ménagée dans le boitier 360 et étant configurée pour être repoussée en position reculée par le dispositif de distribution lorsque le dispositif de protection 300 est monté sur le dispositif de distribution 110 selon le mouvement de montage,
- un organe de rappel 504, qui tend à rappeler la portion d'appui 502 vers la position avancée,
- une portion de déclenchement 506, qui est mobile entre une position d'activation, dans laquelle la portion de déclenchement 506 repousse le déclencheur 372 de la position neutre vers la position excitée, et une position de retrait, dans laquelle la portion de déclenchement 506 ne repousse pas le déclencheur,
- un dispositif de transmission 508, qui relie la portion d'appui 502 à la portion de déclenchement 506, de sorte que lorsque la portion d'appui 502 est en position reculée, la portion de déclenchement 506 est en position de retrait, le mécanisme de sécurité 500 étant dans une configuration de retrait, tandis que lorsque la portion d'appui 502 est en position avancée, la portion de déclenchement 506 est en position d'activation, le mécanisme de sécurité 500 étant dans une configuration d'activation.

Le mécanisme de sécurité 500 est dans la configuration de retrait lorsque le dispositif de protection 300 est en position montée sur le dispositif de distribution 110. Le mécanisme de sécurité 500 est configuré pour que, au cours d'un mouvement de démontage du dispositif de protection 300, le dispositif de sécurité 300 passe de la configuration de retrait vers la configuration d'activation avant que la borne d'arrivée 302 ne soit déconnectée du bus de puissance 124. Autrement dit, si le mécanisme de commutation 310 est initialement en configuration armée, le dispositif de sécurité 500 fait commuter le mécanisme de commutation 310 en configuration déclenchée, par l'intermédiaire du déclencheur 372, avant que la borne d'arrivée 302 ne soit déconnectée du bus de puissance 124. Le circuit de conduction 305 correspondant est donc ouvert avant la déconnexion de la borne d'arrivée 302 considérée du bus de puissance 124, ce qui empêche l'apparition d'arcs électriques éventuels entre la borne d'arrivée 302 et le bus de puissance 124. Le démontage du dispositif de protection 300 est ainsi sécurisé, et ce même si le dispositif de protection 300 était initialement « chaud », c'est-à-dire en configuration armée et qu'un courant électrique circulait au travers du chemin de conduction 305. Une telle possibilité de démontage « à chaud » est aussi appelée « hotswap » en anglais.

Dans l'exemple illustré, la lumière 376 avantageusement est ménagée sur la face arrière 361 du boitier 360, de sorte qu'un utilisateur ne puisse pas interférer avec le mécanisme de sécurité 500 lorsque le dispositif de protection 300 est monté sur le dispositif de distribution 110 ou au cours des mouvements de montage ou de démontage.

Dans le premier mode de réalisation, le boitier 360 ménage un volume interne V360, dans lequel le mécanisme de commutation 310 et le mécanisme de sécurité 500 sont conjointement reçus.

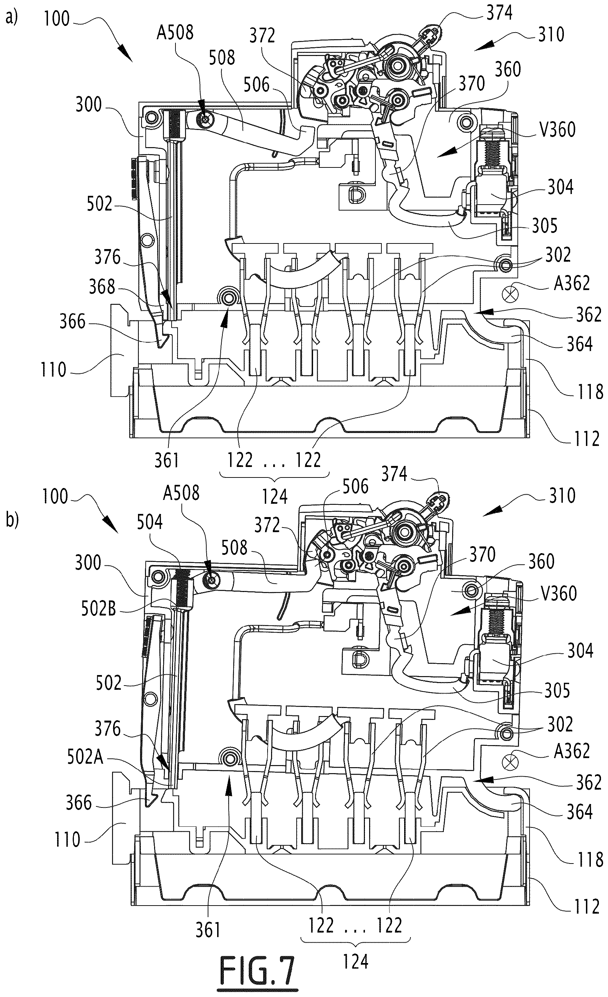

La portion d'appui 502 est ici une tige, qui est avantageusement réalisée en un matériau isolant, par exemple en matériau polymère. La tige est guidée en translation par rapport au boitier 360 et débouche sur la face arrière 361 par la lumière 376. En position avancée, une première extrémité 502A de la tige dépasse de la face arrière 361, comme illustré aux figures 7 b), 8 a) et 8 b). L'organe de rappel 504 est ici un ressort, qui exerce sur une deuxième extrémité 502B de la tige un effort tendant à rappeler la tige en position avancée. Ainsi, la position reculée et la position avancée de la portion d'appui 502 sont ici deux positions axiales. La lumière 376 est avantageusement ménagée à distance du premier bord 362, de manière à augmenter l'amplitude du mouvement axial de la portion d'appui 502. Le mouvement de la portion de déclenchement 506 est ainsi lui-aussi augmenté, ce qui permet de déclencher le mécanisme de commutation 310 avant que les bornes d'arrivée 302 ne soient déconnectées des barres conductrices 122.

Le dispositif de transmission 508 est ici un levier, qui est monté pivotant par rapport au boitier 360 autour d'un axe de pivot A508, qui est ici un axe parallèle à l'axe principal A110. Le dispositif de transmission 508 comprend une première extrémité 508A, par laquelle le dispositif de transmission est relié à la portion d'appui 502, et une deuxième extrémité 508B, qui est situé à l'opposé de la première extrémité 508A par rapport à l'axe de pivot A508 et qui présente ici une forme de crochet ménageant la portion de déclenchement 506. Ainsi, la position d'activation et la position neutre de la portion de déclenchement 506 sont ici deux positions angulaires, autour de l'axe de pivot A508, de la deuxième extrémité 508B du dispositif de transmission 508.

On décrit à présent le fonctionnement du mécanisme de sécurité 500.

À la figure 6, le dispositif de protection 300 est monté sur le dispositif de distribution 110. Chaque borne d'arrivée 302 est connectée à la barre conductrice 122 correspondante. Le mécanisme de commutation 310 est en configuration fermée. La portion d'appui 502 est repoussée dans la position reculée, aussi le mécanisme de sécurité 500 est en configuration neutre et n'interfère pas avec le fonctionnement du mécanisme de commutation 310, notamment si l'utilisateur souhaite manuellement déclencher le mécanisme de commutation 310 à l'aide de la manette 374.

Ce faisant, l'ensemble de distribution 100 est alors dans la configuration de la figure 7 a), dans laquelle le mécanisme de commutation 310 est en configuration déclenchée. Le mécanisme de sécurité 500 est en configuration neutre et n'interfère pas avec le fonctionnement du mécanisme de commutation 310, notamment si l'utilisateur souhaite manuellement réarmer le mécanisme de commutation 310 à l'aide de la manette 374 - pour autant que ce soit possible en l'absence de défauts électriques.

Si, en partant de la configuration de la figure 6, l'opérateur initie le mouvement de démontage alors que le mécanisme de commutation 310 est toujours dans la configuration armée, au cours du mouvement de démontage, la portion d'appui 502 passe progressivement de la position reculée vers la position avancée, et la portion de déclenchement 506 passe progressivement de la position de retrait à la position d'activation, repoussant le déclencheur 372 de la position neutre vers la position excitée, entrainant le déclenchement du mécanisme de commutation 310. L'ensemble de distribution 100 est alors dans la configuration de la figure 7 b), dans laquelle le mécanisme de commutation 300 est déjà déclenché, alors que les bornes d'arrivée 302 sont encore connectées au bus de puissance 124.

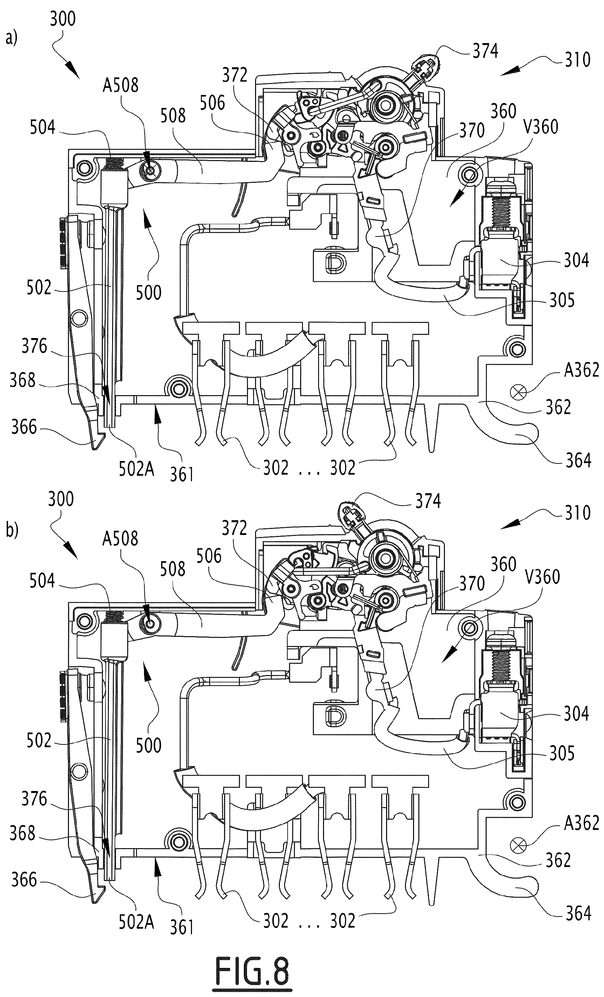

Alors que le mouvement de démontage se poursuit, le dispositif de protection 300 se trouve dans la configuration de la figure 8 a). À partir de cette configuration, le mécanisme de sécurité 500 reste dans la configuration d'activation, repoussant le déclencheur 372 dans la position excitée. Il est alors impossible de réarmer le mécanisme de commutation 310, comme illustré à la figure 8 b), où le contact mobile 370 est en position d'isolement, malgré le fait que la manette 374 est maintenue en position de fermeture par un utilisateur.

Il est donc impossible de remonter sur le dispositif de distribution 100 un dispositif de protection 300 qui serait déjà en configuration armée, à moins bien sûr d'interférer avec le mécanisme de sécurité, ce qui contribue à l'amélioration de la sécurité lors du montage à chaud du dispositif de protection 300, c'est-à-dire lors du montage du dispositif de protection 300 sur un bus de puissance 124 déjà sous tension.

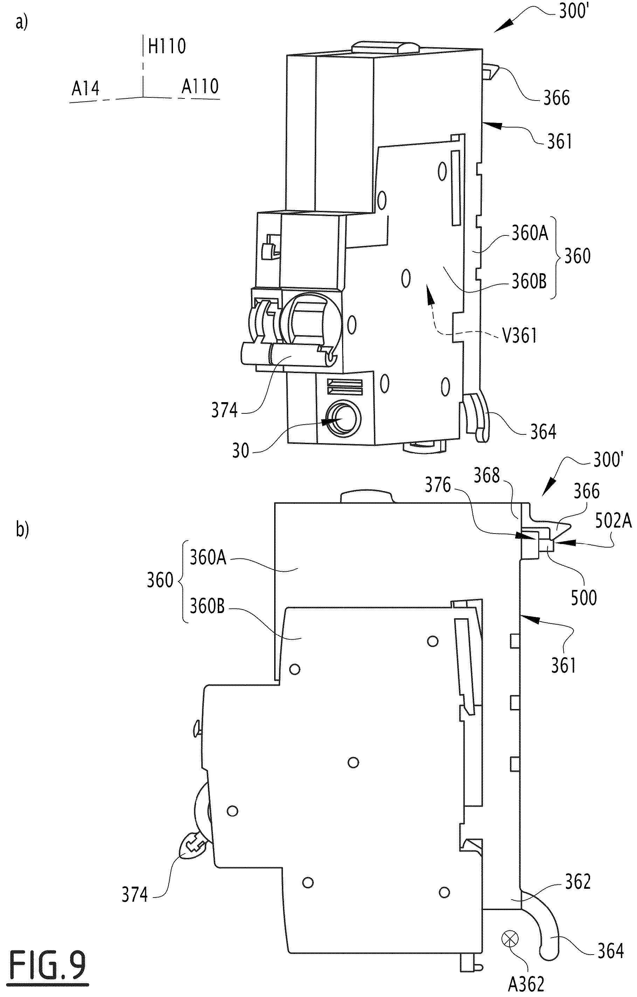

Un dispositif de protection 300' confirme à un deuxième mode de réalisation de l'invention est représenté sur les figures 9 à 11. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation. Si une référence est mentionnée dans la description sans être portée sur une figure ou portée sur une figure sans être mentionnée dans la description, elle désigne le même élément que celui portant la même référence dans le premier mode de réalisation.

Une des principales différences du deuxième mode de réalisation avec le premier mode est que dans le deuxième mode de réalisation, le boitier 360 du dispositif de protection 300' est un boitier modulaire, qui inclut :
- un premier boitier 360A, qui reçoit le mécanisme de sécurité 500, et
- un deuxième boitier 360B, qui est différent du premier boitier 360B, qui reçoit le mécanisme de commutation.

Le premier boitier 360A ménage une cavité V361 de réception du deuxième boitier 360B, le premier boitier 360A et le deuxième boitier 360B étant configurés pour être assemblés l'un à l'autre de manière à former le boitier 360 du dispositif de protection 300', dans une configuration assemblée du boitier 360, comme illustré en figure 9. La paroi arrière 361 du boitier 360 appartient avantageusement au premier boitier 360A. De préférence, l'organe de fixation 364 et l'organe de retenue 366 sont également portés par le premier boitier 360A.

Le dispositif de protection 300' est représenté en position démontée, seule une extrémité de la portion d'appui 502 étant visible à l'extérieur du premier boitier 360A, le reste du mécanisme de sécurité 500 étant caché à l'intérieur du premier boitier 360A.

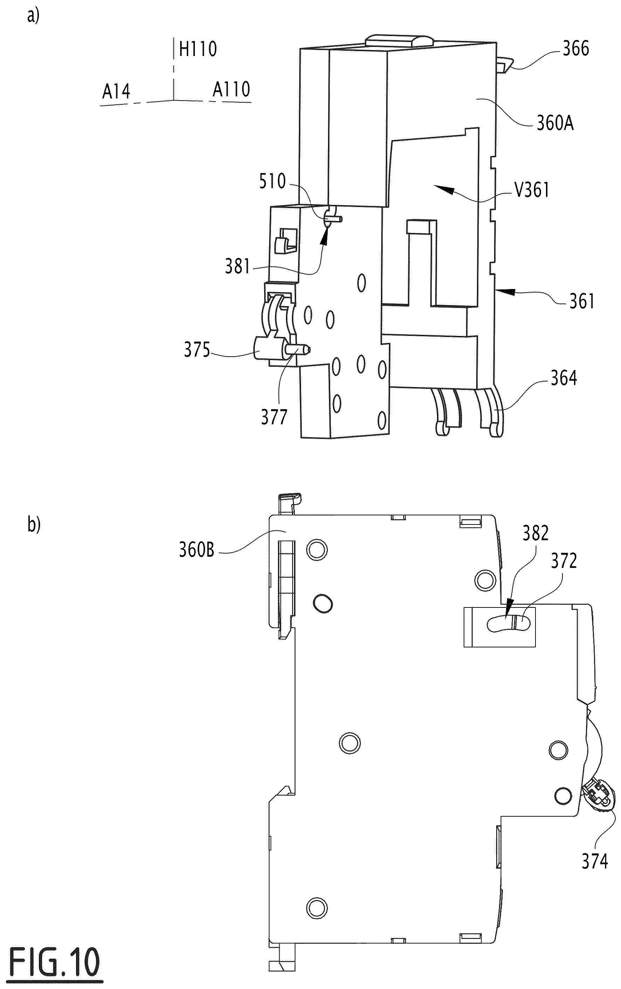

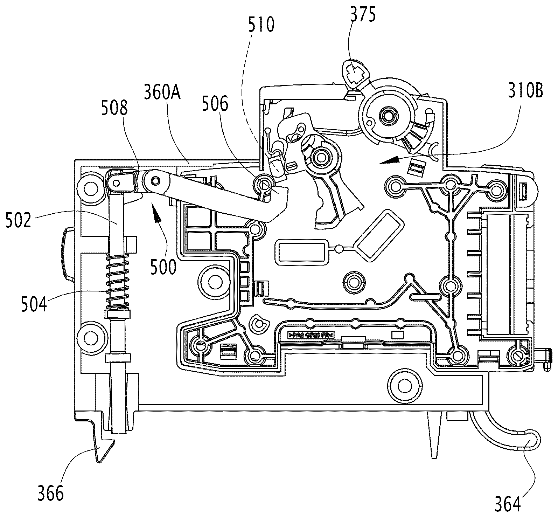

Le premier boitier 360A est représenté isolément à la figure 10 a), tandis que le deuxième boitier 360B est représenté isolément à la figure 10 b). Le deuxième boitier 360B fait par exemple partie d'un dispositif de protection tel qu'un disjoncteur différentiel, qui est avantageusement apte à fonctionner indépendamment du premier boitier 360A, autrement dit sans le mécanisme de sécurité. Comme expliqué dans la suite, la modularité du boitier 360 permet d'ajouter la fonctionnalité de « démontage à chaud », en toute sécurité, à un disjoncteur différentiel qui en est initialement dépourvu.

Le premier boitier 360A présente un premier orifice 381, qui débouche dans la cavité V361, tandis que le mécanisme de sécurité comprend une extension 510, qui est activable par la portion de déclenchement 506, qui dépasse par le premier orifice 381 dans la cavité V361. Le premier orifice 381 présente ici une forme oblongue et incurvée. L'extension 510, qui est aussi appelée « aiguille » voire « doigt », présente ici une forme de cylindre à section circulaire. Ainsi, lorsque la portion de déclenchement 506 se déplace entre la position de retrait et la position d'activation à l'intérieur du premier boitier 360A, l'extension 510 circule, au travers du premier orifice 381, dans la cavité, entre une première position et une deuxième position.

Le deuxième boitier 360B présente un deuxième orifice 382, qui est situé en regard du premier orifice 381 lorsque le boitier est en configuration assemblée. Comme illustré à I la figure 10 a), le deuxième orifice 382 présente avantageusement une forme analogue, voire identique, à celle du premier orifice 381. Lorsque le boitier 360 est en configuration assemblée, l'extension 510 traverse à la fois le premier orifice 381 et le deuxième orifice 382 et pénètre dans le deuxième boitier 360B. Autrement dit, l'extension 510 s'étend à l'intérieur du deuxième boitier 360B, de sorte que lorsque la portion de déclenchement 506, située à l'intérieur du premier boitier 360A, se déplace de la position de retrait vers la position d'activation, l'extension 510 se déplace de la première position vers la deuxième position et repousse le déclencheur 372, situé à l'intérieur du deuxième boitier 360B, de la position neutre vers la position excitée.

Le premier boitier 360A comprend un mécanisme auxiliaire 310B, qui est un mécanisme d'accumulation d'énergie mécanique, comprenant par exemple un ressort, qui est interposé entre le mécanisme de sécurité 500 et l'extension 510. Le mécanisme auxiliaire 310B est commutable entre une configuration armée, dans laquelle l'extension 510 est dans la première position, et une configuration déclenchée dans laquelle l'extension 510 est dans la deuxième position.

Le mécanisme auxiliaire 310B comprend une manette auxiliaire 375, qui est prévue pour faire passer le mécanisme auxiliaire 310B de la configuration déclenchée vers la configuration armée. De préférence, la manette auxiliaire 375 et la manette 374 sont solidarisées l'une à l'autre, de sorte que le mécanisme de commutation 310 et le mécanisme auxiliaire 310B passent conjointement de la configuration armée à la configuration déclenchée, et inversement. Dans l'exemple illustré, la manette auxiliaire 375 et ma manette 374 sont solidarisées par un pion 377.

Le mécanisme auxiliaire est configuré pour commuter de la configuration armée vers la configuration déclenchée lorsque la portion de déclenchement 506 se déplace de la position de retrait vers la position d'activation. Le mécanisme auxiliaire 310B est configuré pour transmettre à l'extension 510 une force suffisante pour faire basculer le mécanisme de commutation 310 de la configuration armée à la configuration déclenchée.

Les modes de réalisation et les variantes mentionnées ci-dessus peuvent être combinés entre eux pour générer de nouveaux modes de réalisation de l'invention.

## Revendications

1. Dispositif de protection (300 ; 300') électrique, comprenant :
- un boitier (360), qui est configuré pour être monté, de manière réversible et selon un mouvement de montage, sur un dispositif de distribution (110) comprenant un bus de puissance (124) avec au moins une phase et éventuellement un neutre, le dispositif de protection (300 ; 300') étant alors dans une position montée, dans laquelle une face arrière (361) du boitier (360) est orientée vers le dispositif de distribution (110),
- un premier chemin de conduction (305), comprenant :
• une première borne d'arrivée (302), qui est configurée pour être connectée au bus de puissance (124),
• une première borne de départ (304), qui est configurée pour être connectée à une charge électrique, et
• un premier contact mobile (370), qui est mobile par rapport au boîtier, entre une position de conduction, dans laquelle le premier contact mobile (370) connecte électriquement la première borne d'arrivée (302) à la première borne de départ (304), et une position d'isolement, dans laquelle la première borne d'arrivée (302) et la première borne de départ (304) sont électriquement isolées l'une de l'autre ;
- un mécanisme de commutation (310), qui est logé dans le boîtier et qui est configuré pour basculer entre :
• une configuration armée, dans laquelle le mécanisme de commutation (310) met le premier contact mobile (370) en position de conduction, et
• une configuration déclenchée, dans laquelle le mécanisme de commutation (310) met le premier contact mobile (370) en position d'isolement ;
dans lequel :
- le mécanisme de commutation (310) comprend un déclencheur (372), qui est mobile entre une position neutre et une position excitée, le déclencheur (372) étant configuré pour faire basculer le mécanisme de commutation (310) en configuration déclenchée lorsque le déclencheur (372) est en position excitée ;
- le dispositif de protection (300 ; 300') électrique comprend un mécanisme de sécurité (500), qui comprend :
• une portion d'appui (502), qui est mobile entre une position reculée et une position avancée, la portion d'appui (502) étant accessible au travers d'une lumière (376) ménagée dans le boitier (360) et étant configurée pour être repoussée en position reculée par le dispositif de distribution (110) lorsque le dispositif de protection (300 ; 300') est monté sur le dispositif de distribution (110) selon le mouvement de montage,
• un organe de rappel (504), qui tend à rappeler la portion d'appui (502) vers la position avancée,
• une portion de déclenchement (506), qui est mobile entre une position d'activation, dans laquelle la portion de déclenchement (506) repousse le déclencheur (372) de la position neutre vers la position excitée, et une position de retrait, dans laquelle la portion de déclenchement (506) ne repousse pas le déclencheur (372),
• un dispositif de transmission (508), qui relie la portion d'appui (502) à la portion de déclenchement (506), de sorte que lorsque la portion d'appui (502) est en position reculée, la portion de déclenchement (506) est en position de retrait, le mécanisme de sécurité (500) étant dans une configuration de retrait, tandis que lorsque la portion d'appui (502) est en position avancée, la portion de déclenchement (506) est en position d'activation, le mécanisme de sécurité (500) étant dans une configuration d'activation,
- le mécanisme de sécurité (500) est dans la configuration de retrait lorsque le dispositif de protection (300 ; 300') est en position montée sur le dispositif de distribution (110),
- le mécanisme de sécurité (500) est configuré pour que, au cours d'un mouvement de démontage, opposé au mouvement de montage, le dispositif de sécurité passe de la configuration de retrait vers la configuration d'activation déclencheur (372)avant que la borne d'arrivée (302) ne soit déconnectée du bus de puissance (124).

2. Dispositif de protection (300 ; 300') selon la revendication 1, dans lequel :
- la lumière (376) est ménagée dans la face arrière (361) du boitier (360).

3. Dispositif de protection (300 ; 300') selon la revendication 2, dans lequel :
- le boitier (360) comprend des organes de fixation (364), qui sont configurés pour coopérer, notamment par complémentarité de formes, avec le dispositif de distribution (110), de sorte que le mouvement de montage est un mouvement de rotation autour d'un axe de montage (A362) situé à proximité d'un premier bord (362) de la face arrière (361),
- la lumière (376) est ménagée à distance du premier bord (362).

4. Dispositif de protection (300) selon l'une quelconque des revendications 1 à 3, dans lequel :
- le boitier (360) ménage un volume interne (V360),
- le mécanisme de commutation (310) et le mécanisme de sécurité (500) sont conjointement reçus dans le volume interne (V360).

5. Dispositif de protection (300') selon l'une quelconque des revendications 1 à 4, dans lequel :
- le boitier (360) du dispositif de protection (300') est un boitier modulaire, qui inclut :
• un premier boitier (360A), qui reçoit le mécanisme de sécurité (500) et qui présente un premier orifice, par lequel dépasse une extension de la portion de déclenchement (506),
• un deuxième boitier (360B), qui est différent du premier boitier (360A) et qui reçoit le mécanisme de commutation (310),
- le premier boitier (360A) ménage une cavité (V361) de réception du deuxième boitier (360B), le premier boitier (360A) et le deuxième boitier (360B) étant configurés pour être assemblés l'un à l'autre de manière à former le boitier (360) du dispositif de protection (300'), dans une configuration assemblée du boitier,
- le premier boitier (360A) présente un premier orifice (381), qui débouche dans la cavité (V361), tandis que le mécanisme de sécurité (500) comprend une extension (510), qui est activable par portion de déclenchement (506) et qui s'étend, au travers du premier orifice (381), dans la cavité (V361), l'extension (510) étant mobile entre une première position et une deuxième position lorsque la portion de déclenchement (506) circule entre la position d'activation et la position de retrait,
- le deuxième boitier (360B) présente un deuxième orifice (382), qui est situé en regard du premier orifice (381) lorsque le boitier (360) est en configuration assemblée,
- lorsque le boitier (360) est en configuration assemblée, l'extension (510) s'étend à l'intérieur du deuxième boitier (360), de sorte que :
• lorsque la portion de déclenchement (506) se déplace de la position de retrait vers la position d'activation, la portion de déclenchement (506) active l'extension (510), l'extension (510) se déplaçant de la première position vers la deuxième position,
• l'extension repousse le déclencheur (372) de la position neutre vers la position excitée.

6. Dispositif de protection (300') selon la revendication 5, dans lequel :
- le premier boitier (360A) comprend un mécanisme auxiliaire (310B), qui est un mécanisme d'accumulation d'énergie mécanique, qui est commutable entre une configuration armée et une configuration déclenchée, l'extension (510) étant dans la première position lorsque le mécanisme auxiliaire (310B) est dans la configuration armée, et dans la deuxième position lorsque le mécanisme auxiliaire est dans la configuration déclenchée,
- le mécanisme auxiliaire (310B) est configuré pour commuter de la configuration armée vers la configuration déclenchée lorsque la portion de déclenchement (506) se déplace de la position de retrait vers la position d'activation,
- le mécanisme auxiliaire (310B) est configuré pour transmettre à l'extension (510) une force suffisante pour faire basculer le mécanisme de commutation (310) de la configuration armée à la configuration déclenchée.

7. Ensemble de distribution (100), comprenant :
- un exemplaire du dispositif de protection (300 ; 300') selon l'une quelconque des revendications 1 à 6, et
- un dispositif de distribution (110), configuré pour distribuer de l'énergie électrique provenant d'une source de puissance à au moins une charge électrique, la source de puissance comprenant au moins une phase et éventuellement un neutre,
dans lequel :
- le dispositif de distribution (110) comprend un bus de puissance (124), qui comprend plusieurs barres conductrices (122), qui incluent au moins une barre de phase et éventuellement une barre de neutre, la barre de neutre étant associée au neutre de la source de puissance, chaque barre de phase étant associée à une phase respective de la source de puissance,
- le dispositif de protection (300 ; 300') est monté sur le dispositif de distribution (110), la portion d'appui (502) étant repoussée en position reculée par le dispositif de distribution (110), chaque borne d'entrée (302) étant connectée à la barre conductrice (122) correspondante.

8. Ensemble de distribution (100) selon la revendication 7, dans lequel :
- les barres conductrices (122) s'étendent parallèlement entre elles selon un axe principal (A110) du dispositif de distribution (110),
- les barres conductrices (122) sont prévues pour le montage simultané de plusieurs exemplaires du dispositif de protection (300 ; 300'), alignés les uns à côté des autres selon l'axe principal (A110).

9. Tableau électrique (10), comprenant :
- un coffre (12), délimitant une enceinte (V12) et présentant un fond (14),
- l'ensemble de distribution (100) selon l'une quelconque des revendications 7 ou 8,
dans lequel le dispositif de distribution (110) est fixé sur le fond du coffre (12).
